# EUROPEAN PATENT APPLICATION

(11) **EP 4 242 348 A1**
(43) Date of publication of application: **13.09.2023**
(21) Application number: 22161378.9
(22) Date of filing: 10.03.2022
(51) Int. Cl.: C25B 1/04, C25B 15/02, H01M 8/04, H01M 8/04313, H01M 8/04694, C25B 9/05, C25B 9/07, H01M 8/04089, H01M 8/04082

(54) **PRESSURE CONTROL SYSTEM AND ELECTROLYSIS FACILITY WITH PRESSURE CONTROL SYSTEM**

(71) Applicant: thyssenkrupp nucera AG & Co. KGaA, 44141 Dortmund (DE)
(72) Inventor: Klink, Stefan, 44789 Bochum (DE); Brinkmann, Jonas, 44803 Bochum (DE)
(74) Representative: thyssenkrupp Intellectual Property GmbH

(57) **Abstract**

The invention relates to a pressure control system (1) for pressure control of at least two pressurized fluid systems (2, 3) comprising a duct (4, 5) for each fluid system (2, 3) having an inlet (6, 7) connectable to the respective fluid system (2, 3) and an outlet (8, 9), a pressure control valve (10, 11) arranged within each of the ducts (4, 5) to control the fluid flow from the inlet (6, 7) to the outlet (8, 9) of the duct (4, 5), wherein the pressure control valves (10, 11) are pilot-operated pressure relief valves having an inlet port (12, 13) for a pilot gas to affect a cracking pressure of the pressure control valves (10, 11), wherein the pressure control system (1) further comprises a common pilot gas buffer system (14), which is connected to each of the inlet ports (12, 13) of the pressure control valves (10, 11) for a simultaneous pressure control of the fluid systems (2, 3).

## Description

### Background of the invention

The invention relates to a pressure control system according to the preamble of claim 1 and an electrolysis facility according to the preamble of claim 13.

Electrolysis facilities of the industrial scale comprise at least one and typically a plurality of electrolyzers, each of which contain a plurality of electrolysis cells that are combined in a cell stack mounted in an electrolyzer frame. Gaseous electrolysis products/educts that are handled within the anode and cathode chambers of the electrolysis cells often form reactive or even explosive mixtures, e.g. hydrogen and chlorine in the chlor-alkali process or hydrogen and oxygen in the case of water electrolysis. For reasons of product purity and safety it is therefore important to keep all gaseous electrolysis products/educts separated from one another at all times.

In the electrolyte circuits of an electrolyzer, in particular in the outflow headers, tanks or separation vessels, the two-phase mixtures of anolyte and oxygen/chlorine or catholyte and hydrogen produced during electrolysis are collected from all cells and the respective gas phases are separated from the respective liquid phases and then discharged as electrolysis products. In certain types of electrolysis, as e.g. NaCl electrolysis with an oxygen depletion cathode, only one gaseous product is produced, but the educt side also comprises a gas system. The gas systems of the electrolyzer form pressurized fluid systems, in which the pressure is supplied at least in part by the electrolysis reaction and controlled by a pressure control system. If the differential pressure between both circuits becomes too large, pores in the separator may be blown free or the separator, the cell or other cell internals may be damaged otherwise, resulting in a potentially dangerous mixing of electrolysis reactants.

Conventional pressure control systems are usually configured to provide a defined absolute pressure in each of the fluid systems, wherein the absolute pressures of the fluid systems are kept at a fixed differential pressure. For example, the hydrogen pressure of the cathode side of a chlor-alkali system typically follows the chlorine pressure of the anode side with a defined differential pressure. In another example, the oxygen pressure of the anode side of a water electrolysis system follows the hydrogen pressure of the cathode side with a defined differential pressure. Generally, it is preferred to keep the fluid system of the electrolysis product with the higher purity requirements at a higher pressure, since transport of gas impurities through the separator in the cells cannot be prevented completely, but controlled with respect to its preferred direction. For normal operation, it is sufficient to have adjustable pressure control valves for pressure control in each of the fluid systems. In a steady state with a fixed pressure differential no or only little adjustments of the valves are required.

However, in transient e.g. a start-up phase or even more importantly in case of an emergency shutdown the pressure of both fluid systems has to be increased or decreased simultaneously in a safe way. In particular, if the permissible differential pressure between the anode and the cathode chamber is exceeded, the separator and/or the electrolysis cell may be damaged, resulting in back mixing and the formation of an explosive gas mixture.

From US 2020/0332426 A1 a water electrolysis system with a control method for a depressurization process is known, wherein the water electrolysis system has a high differential pressure between the cathode and the anode chambers. While the anode chambers are kept at ambient pressure, high-pressure hydrogen is produced at the cathode side. For a precise control of the absolute pressure on the cathode side during depressurization of the electrolysis system a cascade of two pressure-reducing valves interposed between three pressure sensors with different detection ranges is proposed. As the pressure decreases during depressurization, the sensor signals of the pressure sensors are selected one after the other to control the state of a depressurization control valve in different ranges of the absolute pressure. Thereby an accurate control of the depressurization is obtained over a large pressure range. The control method has the disadvantage that it is only applicable to electrolysis systems, wherein only one of the anode or cathode side is pressurized during operation and wherein the separator used to separate the anode and cathode side is suited to withstand a large differential pressure, as e.g. a solid polymer electrolyte membrane.

US 2010/0264038 A1 describes an electrolysis installation for decomposing water into hydrogen and oxygen and a process for inertising an installation of this type. In the electrolyte circuit, the installation comprises a first and a second separator for separating the produced hydrogen and oxygen from the water serving as electrolyte. After separating off the gases, the water is recirculated back to the cells by a recirculation pump. For inertising the separators when the installation is shut down an extinguishing means is provided. The extinguishing means comprises a relief valve and a water level gauge for each separator. When the extinguishing of the installation is triggered, the pressure relief valves are opened in a controlled manner so as to relieve the pressure in the two separators simultaneously, while keeping the water level inside said separators substantially constant.

While it is generally possible to maintain a defined pressure differential between the two separators during extinguishing of the installation by using the water level as control variable, the known solution requires two separate control loops for controlling the water level in each of the separators. This has the disadvantage that a failure of only one of these control loops is a safety-relevant scenario that gives rise to a possible explosion hazard. Moreover, the operation of the control loops requires auxiliary energy, such that a power failure is an additional safety issue. Although these problems can be dealt with by conventional measures such as redundant control loops and uninterruptible power supplies, such measures add significant additional complexity to the system.

### Brief Summary of Invention

The object of the invention is to provide a pressure control system and an electrolysis facility with a simultaneous pressure control of at least two pressurized fluid systems having an improved fault tolerance and a simple design.

This object is achieved by a pressure control system with the features of claim 1 and an electrolysis facility with the features of claim 13.

Hereby a pressure control system for pressure control of at least two pressurized fluid systems is provided. The pressure control system comprises a duct for each fluid system, each duct having an inlet connectable to the respective fluid system and an outlet, and a pressure control valve arranged within each of the ducts to control the fluid flow from the inlet to the outlet of the duct. According to the invention, the pressure control valves are pilot-operated pressure relief valves having an inlet port for a pilot gas to affect a cracking pressure of the pressure control valves. The pressure control system further comprises a common pilot gas buffer system, which is connected to each of the inlet ports of the pressure control valves for a simultaneous pressure control of the fluid systems.

By using a common pilot gas buffer system for pilot control of the pressure control valves, the pressure control of the fluid systems is pneumatically coupled to one another. The pneumatic link between the pressure control valves allows for a simple and reliable simultaneous pressure control, as it does not require any active control loops or supply of auxiliary energy.

Even in case of power failure a pressure loss in the pilot gas buffer system results in a controlled simultaneous safe depressurization of the fluid systems. The resulting pressure control system therefore allows for pressure maintenance and relief for equal and differential pressure controlled fluid systems in a safe and cost-effective way.

In certain embodiments of the invention, the pressure control valves have the same cracking pressure for any given pressure in the pilot gas buffer system. Thus, the pressure control valves will maintain substantially the same pressure in each of the fluid systems, wherein the pressure level is defined by the pilot gas pressure. During depressurization the pressure level in the fluid systems therefore follows simultaneously a decreasing pressure in the pilot gas system.

In other embodiments the at least two of the pressure control valves have cracking pressures that differ by a fixed differential pressure or a fixed pressure ratio for any given pressure in the pilot gas system. The pressure control system is therefore able to maintain a well-defined pressure relation between the fluid systems independent of the absolute pressure level. The well-defined pressure relation is thus maintained during depressurization of the pilot gas buffer system.

Preferably, at least one of the pressure control valves comprises an adjustably spring-loaded valve head to affect its cracking pressure. A spring-loaded valve head in addition to pilot control allows for manual or automatic adjustment of the cracking pressures of the pressure control valves. In particular, the spring-load adjustment can be used to set the cracking pressures of the valves to the same or a fixed differential pressure.

In certain embodiments, at least one of the ducts comprises a pressure reduction valve on the pressure-side of the respective pressure relief valve. A pressure reduction valve is a means to set a specific differential pressure or fixed pressure ratio between the fluid systems, even in case similar or identical pressure relief valves are used in the ducts.

Preferably, the pilot gas buffer system comprises a pressure source for defining the pilot gas pressure in the buffer system in a normal operation mode. The pressure source is configured to keep the pilot gas buffer system at well-defined pressure during normal operation and compensates for any pilot gas losses in the system in the normal operation mode. The pilot gas pressure defined by the pressure source is chosen such that the cracking pressures of the pressure relief valves is at or above the nominal pressure level of the fluid systems in normal operation mode.

Preferably, the pilot gas buffer system has a throttled aperture for venting at least in a depressurization mode. The throttled aperture is provided to accelerate a pressure loss in the pilot gas buffer system in the depressurization mode. The size of the throttled aperture in relation to a buffer volume of the pilot gas buffer system and a supply of pilot gas by the pressure source determines the time interval for depressurization of the pilot gas buffer system, and consequently, the fluid systems. Preferably, the size of the throttled aperture is adapted to the pilot gas buffer system and/or the pressure source to effect a depressurization of the pilot gas buffer system in the depressurization mode within a time interval of 1 to 15 minutes.

In preferred embodiments, the pilot gas buffer system is connected to the pressure source via a pressure control valve and the throttled aperture is formed by a vent valve. Such an embodiment has the advantage that both the supply and the discharge of pilot gas to/from the buffer system can be adjusted depending of the operation mode.

In particular, it is preferred that the pressure control valve is a normally open, fail closed valve and/or the vent valve is a normally closed, fail open valve. In such embodiments, the valves are constructed such that the pressure control system is brought to a safe state automatically in case of a power failure.

In some embodiments, the pressure control valve and the vent valve are interlocked with opposite opening conditions. By a mechanical interlock of the valves the number of potentially error-prone electrically controlled components in the pressure control system is further reduced.

In other embodiments, the throttled aperture is a vent throttle, which is open also in the normal operation mode. Using a preferably fixed vent throttle has the advantage that the number of movable parts is further reduced. In this case, the pressure source is to be designed with a capacity that is sufficient to compensate the losses through the vent throttle in normal operation mode. In case of failure, the pressure source is switched off resulting in a controlled pressure loss in the pilot gas buffer system, and consequently, in the fluid systems.

The object is further achieved by an electrolysis facility comprising a plurality of electrolysis cells each having an anode chamber and a cathode chamber, and two pipe systems connected to the anode and cathode chambers, respectively, for discharging electrolysis products. The electrolysis facility further comprises a pressure control system as described above for pressure control in the pipe systems, wherein the pipe systems form the pressurized fluid systems.

The pressure control system can be used for pressure control in the normal operation mode and for emergency pressure relief and shutdown.

Alternatively, the electrolysis facility comprises additional pressure control circuits to control the pressure in the pipe systems during normal operation and the pressure control system is arranged in parallel to the pressure control circuits for emergency pressure relief and shutdown.

Further advantages of the invention are described in the following with regard to the embodiments shown in the attached drawings.

### Brief Description of Drawings

- Fig. 1A: shows schematically a first embodiment of the pressure control system and an electrolysis according to the invention in a normal operation mode,
- Fig. 1B: shows schematically the embodiment of Fig. 1A in a depressurization mode,
- Fig. 2: shows schematically, a pilot-operated pressure relief valve with an adjusta-bly spring-loaded valve head,
- Fig. 3: shows schematically a second embodiment of the pressure control system and an electrolysis according to the invention.

### Detailed Description of Invention

In the drawings same parts are consistently identified by the same reference signs and are therefore generally described and referred to only once.

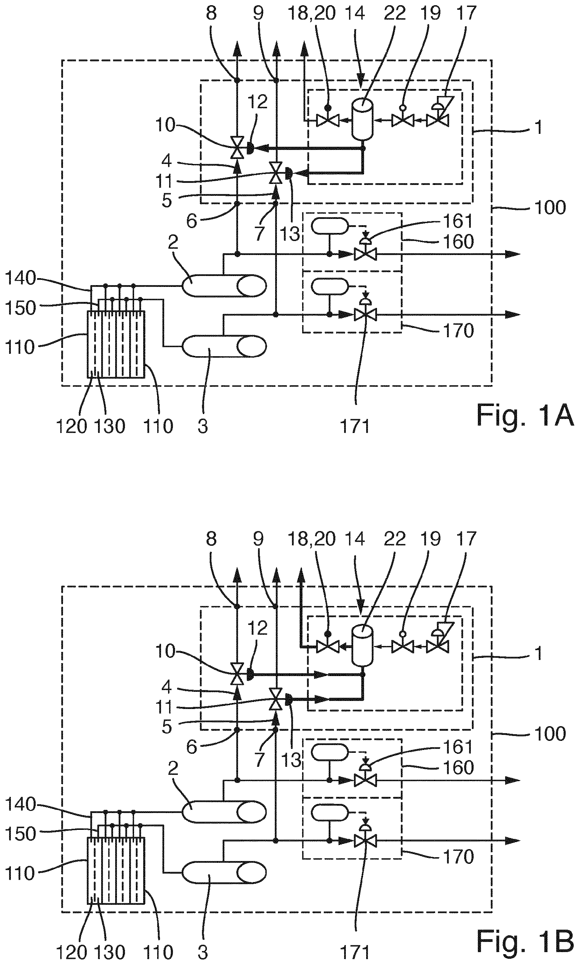

In **Fig. 1A and 1B** a first embodiment of an electrolysis facility 100 according to the invention is shown. The electrolysis facility 100 comprises a plurality of electrolysis cells 110 each having an anode chamber 120 and a cathode chamber 130. The electrolysis cells 110 are arranged electrically in series and form a cell stack, with the outmost electrolysis cells 110 being connected to a direct current power supply (not shown). The electrolysis facility 100 may be configured for chlor-alkali or alkaline water electrolysis, for example.

The electrolysis facility 100 further comprises two pipe systems 140, 150 connected to the anode and cathode chambers 120, 130, respectively, for discharging electrolysis products. In order to control the pressure in the pipe systems 140, 150 during normal operation the electrolysis facility 100 comprises pressure control circuits 160, 170. The pressure control circuits 160, 170 may for example contain pressure-regulating valves 161, 171.

In parallel to the pressure control circuits 160, 170 a pressure control system 1 is arranged in the electrolysis facility for emergency pressure relief and/or shutdown.

The pressure control system 1 comprises a duct 4, 5 for each fluid system 2, 3. The ducts 4, 5 have an inlet 6, 7 that is connected to the respective fluid system 2, 3 and an outlet 8, 9. The pressure control system further comprises a pressure control valve 10, 11 arranged within each of the ducts 4, 5 to control the fluid flow from the inlet 6, 7 to the outlet 8, 9 of the respective duct 4, 5. The outlets 8, 9 are typically connected to discharge pipes for venting.

The pressure control valves 10, 11 are pilot-operated pressure relief valves having an inlet port 12, 13 for a pilot gas to affect a cracking pressure of the pressure control valves 10, 11. The pressure control system 1 further comprises a common pilot gas buffer system 14, which is connected to each of the inlet ports 12, 13 of the pressure control valves 10, 11 for a simultaneous pressure control of the fluid systems 2, 3. The pilot gas buffer system 14 preferably contains a pilot gas buffer vessel 22 providing buffering volume for the pilot gas. The pilot gas is preferably an inert gas, for example nitrogen.

Depending on the design of the electrolysis facility 100 it may be preferred to depressurize the electrolysis cells 110 in case of a shutdown or an emergency pressure relief with an equal pressure in both chambers 120, 130 or with a defined pressure relation between the chambers 120, 130. Accordingly, the pressure control valves 10, 11 may have the same cracking pressure for any given pressure in the pilot gas buffer system 14 to maintain a substantially equal pressure in the chambers 120, 130 during shutdown, or the pressure control valves 10, 11 may have cracking pressures that differ by a fixed differential pressure or a fixed pressure ratio for any given pressure in the pilot gas buffer system 14. For example, at least one of the pressure control valves 10, 11 may comprises an adjustably spring-loaded valve head 15 to affect its cracking pressure in order to set the cracking pressures to the same level or a fixed differential pressure. In electrolysis cells 110 with a porous diaphragm separating the chambers 120, 130, the differential pressure may be chosen in the range of 20 mbar to 2 bar, wherein the upper limit corresponds approximately to the bubble point of a diaphragm. In electrolysis cells 110 with a membrane, the differential pressure may be chosen in the range of 20 mbar to 5 bar. Usually, in electrolysis applications, the differential pressure will be chosen comparatively low, e.g. in the range of 20 to 200 mbar.

Preferably, the pilot gas buffer system 14 comprises a pressure source 17 for defining the pilot gas pressure in the buffer system 14 in a normal operation mode. The pilot gas buffer system 14 further has a throttled aperture 18 for venting at least in a depressurization mode. Preferably, the size of the throttled aperture 18 is adapted to the buffering volume of the pilot gas buffer system 14 and/or the pressure source 17 to effect a depressurization of the pilot gas buffer system 14 in the depressurization mode within a time interval of 1 to 15 minutes. The pilot gas pressure in normal operation mode is preferably chosen within the range of 5 to 30 bar (g).

In the embodiment shown in Fig. 1A and 1B the pilot gas buffer system 14 is connected to the pressure source 17 via a pressure control valve 19 and the throttled aperture 18 is formed by a vent valve 20.

Fig. 1A shows the electrolysis facility 100 in normal operation mode. Gaseous electrolysis products are produced in the anode and cathode chambers 120, 130 of the electrolysis cells 110 and discharged through the pipe systems 140, 150 forming pressurized the fluid systems 2, 3. The pressure in the fluid systems 2, 3 is regulated to a nominal pressure by the pressure control circuits 160, 170. After having passed the pressure control circuits 160, 170 the electrolysis products are discharged to the boundary limit of the electrolysis facility 100.

In parallel to the pressure control circuits 160, 170 the pressure control system 1 is arranged. In normal operation mode, the pilot gas buffer system 14 is pressurized by the pressure source 17 to a pressure level that keeps the cracking pressure of the pressure control valves 10, 11 at or above the nominal pressures in the fluid systems 2, 3. Thus, in normal operation the pressure control valves 10, 11 act as pressure relief valves that open in case that the pressure level in the fluid systems 2, 3 should rise for some reason beyond their nominal pressures. To keep the pilot gas buffer system 14 pressurized, the pressure control valve 19 is open and set to the required pilot gas pressure level. The vent valve 20 is kept closed in order to reduce losses of pilot gas. As depicted by the bold arrows in Fig. 1A, the pilot gas flows in normal operation mode from the pressure source into the buffer vessel 22 and pressurizes the inlet ports 12, 13 of the pressure control valves 10, 11.

As depicted in **Fig. 1B**, in case of a shutdown and/or depressurization of the electrolysis facility 100, the pressure control valve 19 is closed and the vent valve 20 is opened. Thus, the pilot gas is vented from the buffer vessel 22 without further supply from the pressure source, such that the pressure at the inlet ports 12, 13 of the pressure control valves 10, 11 decreases simultaneously. Consequently, the cracking pressures of the pressure control valves 10, 11 and thus the pressure within the fluid systems 2, 3 decreases in a controlled manner.

Preferably, the pilot gas buffer system 14 is designed with a time constant for pressure relief through the throttled aperture 18 that is larger, preferably at least 2 times larger, than the time constant of the fluid systems 2, 3 for pressure relief through fully-opened pressure control valves 10, 11. In this case, the fluid systems 2, 3 will follow the opening of the pressure control valves 10, 11 in a nearly equilibrium state allowing for a precise pressure control during depressurization.

Preferably, the pressure control valve 19 is a normally open, fail closed valve and/or the vent valve 20 is a normally closed, fail open valve. The pressure control valve 19 and the vent valve 20 may also be interlocked with opposite opening conditions. Thus, even in case of a power failure, the pressure control system is automatically brought in a safe depressurization state.

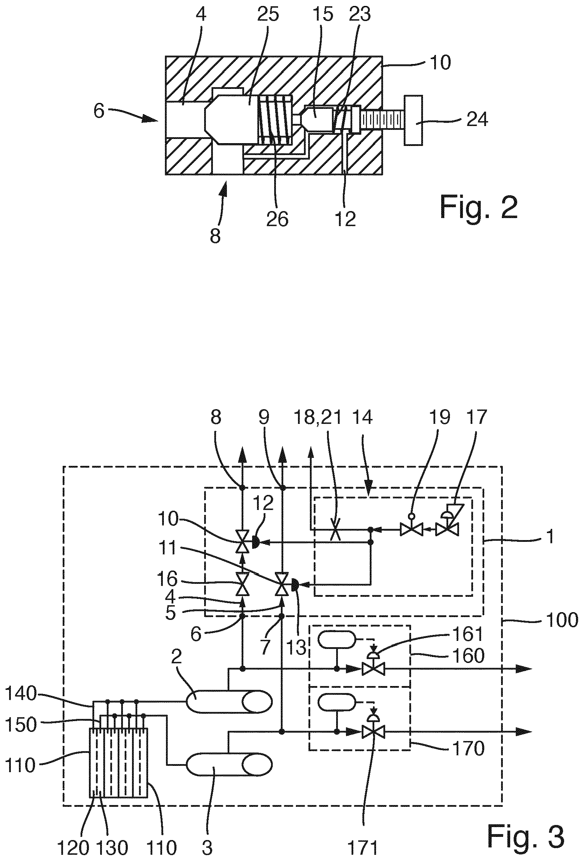

**Fig. 2** shows an example of a pilot-operated pressure relief valve that can be used as pressure control valve 10 or 11. The inlet 6 and the outlet 8 of the valve 10 are connected by duct 4 that is adjustably obstructed by a main valve head 25. The position of the main valve head 25 depends on the pressure difference between inlet 6 and outlet 8 side as well as the position of a valve head 15 of a pilot valve. The valve head 15 is controlled via the pilot gas inlet port 12 and is adjustably spring loaded by spring 15. The spring load of spring 15 is adjustable by adjustment spindle 24. The adjustment spindle 24 can be adjusted manually or actuated electrically.

In **Fig. 3** a second embodiment of an electrolysis facility 100 with a pressure control system 1 according to the invention is shown. The pressure control system 1 differs from the embodiment of Fig. 1A in that one of the ducts 4 comprises a pressure reduction valve 16 on the pressure-side of the respective pressure relief valve 10. Thus, even when using identical pressure control valves 10, 11 with the same cracking pressures, the pressure reduction valve 16 can - dependent on its design - ensure either a fixed pressure differential or a fixed pressure ratio in the fluid systems 2, 3 during depressurization.

The pressure control system 1 further differs from Fig. 1A and 1B in that the throttled aperture is a vent throttle 21, which is open also in the normal operation mode. During normal operation the pressure source 17 compensates for any losses of pilot gas due to the open vent throttle 21 and maintains a constant pressure in the pilot gas buffer system 14. In the depressurization mode valve 19 is closed and the pilot gas buffer system 14 depressurizes through vent throttle 21.

In all other respects, the description of the first embodiment shown in Figs. 1A and 1B is applicable to the second embodiment shown in Fig. 3, accordingly.

In an embodiment not shown, the electrolysis facility comprises the pressure control system according to the invention as the main pressure control circuit to control the pressure in the pipe systems during normal operation and during an emergency pressure relief and/or shutdown of the facility. Thus, the electrolysis facility may comprise the inventive pressure control system as the one and only system to control the pressure in the pipe systems.

### List of Reference Signs

- 1: Pressure control system
- 2, 3: Pressurized fluid system
- 4,5: Duct
- 6,7: Inlet
- 8,9: Outlet
- 10, 11: Pressure control valve
- 12, 13: Inlet port
- 14: Pilot gas buffer system
- 15: Spring loaded valve head
- 16: Pressure reduction valve
- 17: Pressure source
- 18: Throttled aperture
- 19: Pressure control valve
- 20: Vent valve
- 21: Vent throttle
- 22: Buffer vessel
- 23: Spring
- 24: Adjustment spindle
- 25: Main valve head
- 26: Spring
- 100: Electrolysis facility
- 110: Electrolysis cell
- 120: Anode chamber
- 130: Cathode chamber
- 140, 150: Pipe system
- 160, 170: Pressure control circuit
- 161, 171: Pressure-regulating valve

## Claims

1. Pressure control system for pressure control of at least two pressurized fluid systems (2, 3) comprising
a duct (4, 5) for each fluid system (2, 3) having an inlet (6, 7) connectable to the respective fluid system (2, 3) and an outlet (8, 9),
a pressure control valve (10, 11) arranged within each of the ducts (4, 5) to control the fluid flow from the inlet (6, 7) to the outlet (8, 9) of the duct (4, 5),
**characterized in that**
the pressure control valves (10, 11) are pilot-operated pressure relief valves having an inlet port (12, 13) for a pilot gas to affect a cracking pressure of the pressure control valves (10, 11),
wherein the pressure control system (1) further comprises a common pilot gas buffer system (14), which is connected to each of the inlet ports (12, 13) of the pressure control valves (10, 11) for a simultaneous pressure control of the fluid systems (2, 3).

2. Pressure control system according to claim 1, **characterized in that** the pressure control valves (10, 11) have the same cracking pressure for any given pressure in the pilot gas buffer system (14).

3. Pressure control system according to claim 1, **characterized in that** at least two of the pressure control valves (10, 11) have cracking pressures that differ by a fixed differential pressure or a fixed pressure ratio for any given pressure in the pilot gas buffer system (14).

4. Pressure control system according to any one of the claims 1 to 3, **characterized in that** at least one of the pressure control valves (10, 11) comprises an adjustably spring-loaded valve head (15) to affect its cracking pressure.

5. Pressure control system according to any one of the claims 1 to 4, **characterized in that** at least one of the ducts (4) comprises a pressure reduction valve (16) on the pressure-side of the respective pressure relief valve (10).

6. Pressure control system according to any one of the claims 1 to 5, **characterized in that** the pilot gas buffer system (14) comprises a pressure source (17) for defining the pilot gas pressure in the buffer system (14) in a normal operation mode.

7. Pressure control system according to any one of the claims 1 to 6, **characterized in that** the pilot gas buffer system (14) has a throttled aperture (18) for venting at least in a depressurization mode.

8. Pressure control system according to claims 6 and 7, **characterized in that** the size of the throttled aperture (18) is adapted to the pilot gas buffer system (14) and/or the pressure source (17) to effect a depressurization of the pilot gas buffer system (14) in the depressurization mode within a time interval of 1 to 15 minutes.

9. Pressure control system according to claims 6 and 7 or 8, **characterized in that** the pilot gas buffer system (14) is connected to the pressure source (17) via a pressure control valve (19) and **in that** the throttled aperture is formed by a vent valve (20).

10. Pressure control system according to claim 9, **characterized in that** the pressure control valve (19) is a normally open, fail closed valve and/or the vent valve (20) is a normally closed, fail open valve.

11. Pressure control system according to any one of claims 9 or 10, **characterized in that** the pressure control valve (19) and the vent valve (20) are interlocked with opposite opening conditions.

12. Pressure control system according to claims 6 and 7 or 8, **characterized in that** the throttled aperture is a vent throttle (21), which is open also in the normal operation mode.

13. Electrolysis facility comprising a plurality of electrolysis cells (110) each having an anode chamber (120) and a cathode chamber (130) and two pipe systems (140, 150) connected to the anode and cathode chambers (120, 130), respectively, for discharging electrolysis products, **characterized in that** the electrolysis facility further comprises a pressure control system (1) according to one of the claims 1 to 12 for pressure control in the pipe systems (140, 150), wherein the pipe systems (140, 150) form the pressurized fluid systems (2, 3).

14. Electrolysis facility according to claim 13, **characterized in that** the electrolysis facility (100) comprises pressure control circuits (160, 170) to control the pressure in the pipe systems (140, 150) during normal operation and wherein the pressure control system (1) is arranged in parallel to the pressure control circuits (160, 170) for emergency pressure relief and shutdown.
